# EUROPÄISCHE PATENTSCHRIFT

(11) **EP 4 115 468 B1**
(45) Veröffentlichungstag und Bekanntmachung des Hinweises auf die Patenterteilung: **19.11.2025**
(21) Anmeldenummer: 21708170.2
(22) Anmeldetag: 22.02.2021
(51) Int. Cl.: H01M 10/42, H01M 10/48, H01M 50/209, H01M 50/289

(54) **VORRICHTUNG SOWIE VERFAHREN ZUR ÜBERWACHUNG VON NEBENEINANDER ANGEORDNETEN ZELLEN**
DEVICE AND METHOD FOR MONITORING CELLS ARRANGED SIDE BY SIDE
DISPOSITIF ET PROCÉDÉ PERMETTANT DE SURVEILLER DES CELLULES DISPOSÉES CÔTE À CÔTE

(30) Priorität: 05.03.2020 DE 102020202856
(43) Veröffentlichungstag der Anmeldung: 11.01.2023
(73) Patentinhaber: LEONI Bordnetz-Systeme GmbH, 97318 Kitzingen (DE)
(72) Erfinder: RÖDER, Manuel, 97236 Randersacker (DE); VORNBERGER, Eginhard, 97320 Buchbrunn (DE)
(74) Vertreter: FDST Patentanwälte
(86) Internationale Anmeldenummer: PCT/EP2021/054354
(87) Internationale Veröffentlichungsnummer: WO 2021/175642

(56) Entgegenhaltungen:
- WO-A1-2016/131771
- WO-A1-2016/131771
- DE-A1- 102015 208 464
- DE-A1- 102015 208 464
- DE-B3- 102018 212 567
- DE-B3- 102018 212 567

## Beschreibung

Die Erfindung betrifft eine Vorrichtung sowie ein Verfahren zur Überwachung von nebeneinander angeordneten Zellen, insbesondere einer Batterie.

Bei wieder aufladbaren Batterien, speziell Lithium-Batterien und insbesondere bei Hochvolt-Fahrzeugbatterien, welche für einen elektrischen Fahrantriebsmotor eingesetzt werden, ist es wichtig, Beschädigungen der Batterie möglichst frühzeitig zu erkennen, um Folgeschäden, wie Brand oder Explosion der Batterie zu vermeiden. Indikatoren für Beschädigungen sind beispielsweise Temperaturerhöhungen, irreguläre Änderungen im Innenwiderstand und/oder Volumenänderungen. So ist beispielsweise das Problem des sogenannten "Thermal Runaway" oder auch "Thermisches Durchgehen" bekannt. Bei diesem handelt es sich um eine exotherme chemische Reaktion innerhalb einer Batteriezelle, bei der es aufgrund eines sich selbst verstärkenden und Wärme produzierenden chemischen Prozesses zu einer Überhitzung bis hin zu einer Explosion der Zelle oder zu einem Brand kommt. Ein derartiger Thermal Runaway startet innerhalb einer Zelle einer Batterie, beispielsweise aufgrund einer Überlastung oder eines Kurzschlusses.

Zur prädiktiven Erkennung von potentiellen Schäden ist der Einsatz von Temperatursensoren bekannt, die jedoch träge reagieren. Weiterhin sind Verfahren zum Erkennen von Volumenänderungen z.B. aufgrund einer Temperaturerhöhung möglich.

Aus DE 10 2018 212 567 B3 ist eine Überwachung von Hochvolt-Batterien beim Kraftfahrzeug zu entnehmen, bei der über die Zellenverschaltung und damit über eine Powerline Communication (PLC) ein Prüfsignal mit einem Frequenzspektrum eingespeist wird und aus einem Reaktionssignal hierzu Rückschlüsse auf Eigenschaften der individuellen Zellen, wie beispielsweise deren Abstand zueinander, gezogen werden. Das Reaktionssignal kann dabei auch durch die Kapazität zwischen zwei benachbarten Zellen beeinflusst werden. Bei einer Abstandsänderung wird eine Resonanzfrequenz verändert, was über das Reaktionssignal erfasst wird.

Aus der DE 10 2015 208 464 A1 ist ein ähnliches System zur Überwachung von Batteriezellen zu entnehmen, bei dem wiederum ein Prüfsignal mit einer definierten Frequenz oder einem Frequenzspektrum eingespeist wird. Frequenzänderungen des Prüfsignals werden ausgewertet. Für jede Batteriezelle ist ein jeweiliger Zellnetzwerkknoten vorgesehen ist, mit dessen Hilfe für jede Batteriezelle individuell ein Prüfsignal durch die Zelle geleitet wird.

Gemäß der WO 2016/131771 A1 ist für einen aktiven Spannungsausgleich zwischen benachbarten Batteriezellen (aktives Balancing) eine kapazitive Energieübertragung zwischen benachbarten Batteriezellen vorgesehen.

Ausgehend hiervon liegt der Erfindung die Aufgabe zugrunde, eine Vorrichtung sowie ein Verfahren zur Überwachung von Zellen insbesondere einer Batterie (Akkumulator), speziell einer Lithium-Ionen-Batterie zur Vermeidung von Folgeschäden anzugeben.

Die Aufgabe wird gemäß der Erfindung gelöst durch eine Vorrichtung mit den Merkmalen des Anspruchs 1 sowie durch ein Verfahren mit den Merkmalen des Anspruchs 12. Die im Hinblick auf die Vorrichtung angeführten Vorteile und bevorzugten Ausgestaltungen sind sinngemäß auch auf das Verfahren zu übertragen.

Die Vorrichtung dient zum Überwachen einer Anordnung von in einer Querrichtung nebeneinander angeordneten Zellen, insbesondere einer Batterie, speziell einer Lithium-Ionen-Batterie. Bei dieser handelt es sich vorzugsweise um die Fahrbatterie eines elektromotorisch angetriebenen Kraftfahrzeugs. Die Vorrichtung umfasst dabei die Zellen und insbesondere die Batterie. Eine jeweilige Zelle weist ein Zellgehäuse auf. Weiterhin ist eine Messanordnung zur Erfassung eines Abstandmaßes zwischen zwei benachbarten Zellgehäusen vorgesehen. Die Messanordnung umfasst dabei zumindest ein Messgerät zur Bestimmung der Kapazität eines Kondensators als ein Kriterium für das Abstandsmaß. Der Kondensator, dessen Kapazität bestimmt wird, ist dabei durch benachbarte Zellgehäuse gebildet.

Diese Ausgestaltung beruht zunächst auf der Überlegung, dass Schädigungen einer Batterie sich häufig in irregulären, unzulässigen Volumenänderungen der einzelnen Zellen, beispielsweise in Folge einer irregulären Temperaturerhöhung, beispielsweise im Vorfeld eines sogenannten Thermal Runaways ankündigen. Durch die temperaturbedingte Volumenänderung ändert sich der in der Querrichtung betrachtete Abstand zwischen zwei benachbarten Zellen und damit zwischen den Zellgehäusen der benachbarten Zellen.

Von besonderer Bedeutung ist nunmehr, dass das Abstandsmaß zwischen benachbarten Zellgehäusen ohne die Verwendung eines zusätzlichen, separaten Sensors und insoweit sensorlos erfolgt. Vielmehr wird das Zellgehäuse selbst mit in die Messanordnung integriert und verschaltet, indem ein jeweiliges Zellgehäuse Teil eines kapazitiven Sensors und damit Teil eines Kondensators ist. Die Zellgehäuse werden daher jeweils als Kondensatorplatten, also als die Elektroden des Kondensators angesehen und entsprechend verschaltet. Bei einer Volumenänderung einer der Zellen dehnt sich das Zellgehäuse nach außen, wodurch der Abstand zu den benachbarten Zellgehäuse und damit der Plattenabstand zwischen den beiden durch die benachbarten Zellgehäuse gebildeten Kondensatorplatten verringert wird, sodass eine Kapazitätsänderung in Abhängigkeit der Veränderung des Abstands erfolgt und über die Messanordnung erfasst wird. Die Kondensatorplatten werden dabei insbesondere unmittelbar durch die Zellgehäuse, also durch das Material der Gehäusewand gebildet. Eine zusätzliche, insbesondere örtlich selektive Maßnahme zur Ausbildung der Elektroden des Kondensators, wie z.B. ein insbesondere lediglich lokales Aufbringen einer zusätzlichen leitfähigen Lage oder einer Beschichtung zur Ausbildung der Elektroden ist vorzugsweise nicht vorgesehen. Es erfolgt insbesondere keine nachträgliche Behandlung der Gehäusewand im Sinne des Aufbringens einer Schicht oder eines zusätzlichen Bauteils wie beispielsweise eine weitere Wand oder eine Platte zur Ausbildung der Kondensatorflächen. Bei der Gehäusewand handelt es sich daher insbesondere um eine einlagige metallische Wand.

Ein besonderer Vorteil der vorliegenden Ausgestaltung ist daher darin zu sehen, dass die (sowieso) bestehenden Gehäusewände insbesondere ohne spezielle weitere Maßnahmen als die Kondensatorplatten herangezogen werden. Entsprechend sind auch die Gehäusewände unmittelbar elektrisch zur Durchführung der Messung kontaktiert. Bevorzugt ist daher allgemein ein Kontaktelement vorgesehen, welches mit der Gehäusewand elektrisch leitend verbunden ist.

Da das Zellgehäuse insgesamt herangezogen wird, ist in vorteilhafter Ausgestaltung vorgesehen, das Zellgehäuse (lediglich) an einer Oberseite zu kontaktieren. Dies lässt sich besonders einfach verwirklichen. Eine Kontaktierung an den einander zugewandten Seitenflächen der Zellgehäuse ist daher nicht erforderlich und auch nicht vorgesehen.

Sofern vorliegend von der Erfassung eines Abstandsmaßes gesprochen wird, so wird hierunter die Erfassung des absoluten Abstands oder eines zum Abstand korrelierten Kapazitätswertes zwischen den Zellgehäusen verstanden. Bevorzugt wird hierunter jedoch eine relative Veränderung des Abstands oder die korrelierte relative Änderung des Kapazitätswertes zwischen den beiden Zellgehäusen verstanden. In gleicher Weise wird unter Bestimmung der Kapazität die absolute Bestimmung der aktuellen Kapazität zwischen den Zellgehäusen verstanden. Vorzugsweise wird auch hier eine Kapazitätsänderung, also eine relative Veränderung erfasst.

Bei der Bestimmung der Kapazität handelt es sich erfindungsgemäß um eine direkte Messung der Kapazität zwischen den benachbarten Zellgehäuse mittels des zumindest einen Messgeräts und der Messanordnung. Unter Bestimmung der Kapazität wird nicht erfindungsgemäß auch eine rechnerische, abgeleitete Ermittlung der Kapazität aus anderen Kenngrößen verstanden. So kann nicht erfindungsgemäß zunächst eine Kapazität von mehreren Zelle jeweils zunächst gegenüber einer gemeinsamen Basis, beispielsweise einem gemeinsamen (Modul-) Gehäuse ermittelt werden und hieraus mittelbar eine Kapazität zwischen benachbarten Zellgehäusen als Kriterium für das Abstandsmaß abgeleitet werden.

Erfindungsgemäß wird jedoch unmittelbar die Kapazität zwischen den benachbarten Zellgehäusen erfasst, und zwar durch das Messgerät gemessen.

Die Messanordnung weist weiterhin typischerweise eine Auswerteeinheit zur Auswertung der ermittelten Kapazitäten bzw. Abstandsmaße auf.

Mit dieser Messanordnung wird die Batterie prädiktiv auf eventuell entstehende Schäden, beispielsweise im Hinblick auf die Entstehung eines Thermal Runaways überwacht. Sobald eine kritische Ausdehnung bzw. Abstandsänderung zwischen zwei benachbarten Zellen detektiert wird, die einen kritischen Wert übersteigt, wobei dieser kritische Wert charakteristisch für einen potentiellen Schaden ist, so wird eine entsprechende Gegenmaßnahme eingeleitet. Eine solche besteht beispielsweise darin, die Belastung der Batterie zu reduzieren oder die Batterie vom restlichen (Bord-)Netz speziell eines Kraftfahrzeugs zu trennen. Die Vorrichtung mit der Messanordnung, speziell die Auswerteeinheit ist insgesamt zur Durchführung dieser Schritte ausgelegt und eingerichtet.

Der kritische Wert für die Abstandsänderung ist allgemein größer als eine betriebsübliche Änderung infolge von normalen, betriebsbedingten Temperaturschwankungen innerhalb eines zulässigen Betriebstemperaturbereiches.

Durch diese Maßnahme ist daher insgesamt eine prädiktive Erkennung eines potenziell entstehenden Schadens gewährleistet und die Entstehung eines solchen zuverlässig vermieden. Ein besonderer Vorteil der Messanordnung besteht darin, dass jeweils eine individuelle Messung zwischen zwei in Querrichtung benachbarten Zellen erfolgt, sodass also jede Zelle individuell überwacht werden kann.

Die hier beschriebene Vorrichtung und das Verfahren sind nicht auf die Überwachung einer Batterie beschränkt. Sie dienen allgemein zur Überwachung von nebeneinander angeordneten Behältern, hier als Zellen bezeichnet, die flexible Zellgehäuse (Behälterwände) aufweisen.

Die hier betrachteten Batterien, speziell Fahrzeugbatterien, sind derart aufgebaut, dass mehrere Zellen zu einem Zellmodul zusammengefasst sind. Innerhalb eines Zellmoduls sind die einzelnen Zellen typischerweise in Serie miteinander verschaltet, sodass sich die Spannung des Zellmoduls aus der Summe der Spannungen der einzelnen Zellen ergibt. Das Zellmodul selbst weist typischerweise ein Modulgehäuse auf. Die einzelnen in einem Zellmodul zusammengefassten Zellen sind typischerweise innerhalb des Modulgehäuses gegeneinander verspannt gehalten. Hierdurch wird eine möglichst hohe Packungsdichte der einzelnen Zellen und insgesamt ein kompakter Aufbau der Batterie erreicht. Mehrere derartige Zellmodule werden zur Ausbildung der gesamten Batterie wiederum miteinander verschaltet und typischerweise innerhalb eines Batteriegehäuses zusammengefasst. Die einzelnen Zellmodule sind typischerweise ebenfalls in Serie miteinander verbunden, um die gewünschte Batteriespannung zu erreichen. Je nach Anwendungsgebiet, speziell bei einer Batterie zur Versorgung eines elektrischen Fahrmotors eines Kraftfahrzeugs, liegt die Batteriespannung und die entsprechende Versorgungsspannung für den elektrischen Fahrmotor bei typischerweise mehreren 100 Volt, bevorzugt größer 300 Volt und beispielsweise im Bereich zwischen 300 und 1.000 Volt.

Sofern vorliegend von "Zelle" gesprochen wird, so ist hierunter sowohl eine einzelne (galvanische) Einzelzelle zu verstehen, welche eine (einzige) Kathode sowie eine (einzige) Anode und einen dazwischen angeordneten Separator aufweist.

Daneben wird unter "Zelle" ergänzend auch die gemeinsame Anordnung von mehreren derartigen Einzelzellen verstanden, bei der sich also der Schicht-Aufbau Kathode - Separator - Anode periodisch wiederholt. Werden mehrere derartige Einzelzellen für den Aufbau einer Zelle herangezogen, so sind die darin enthaltenen Einzelzellen vorzugsweise parallel verschaltet. Die Zelle weist daher die Spannung einer jeweiligen Einzelzelle auf. Eine Einzelzelle weist typischerweise eine Spannung im Bereich von einigen Volt, beispielsweise im Bereich zwischen 1 und 5 Volt auf. Typische Werte für eine Lithium-Einzelzelle liegen - in Abhängigkeit der eingesetzten Materialien - zwischen 2 und 4,5 Volt. Unter "Zelle" wird vorliegend insbesondere eine Einzelzelle verstanden.

Das Gehäuse einer Zelle, vorliegend als Zellgehäuse bezeichnet, besteht beispielsweise aus einem zumindest weitgehend starren, typischerweise quaderförmigen Körper. Insbesondere besteht das Zellgehäuse aus einem elektrisch leitfähigen Werkstoff, beispielsweise aus einem Metall, insbesondere aus einer Aluminiumlegierung. Typischerweise ist das verwendete Material, also insbesondere ein Metall oder eine Metalllegierung, bis zu einem gewissen Grad elastisch oder plastisch verformbar. Das beispielswese (weitgehend) starre Zellgehäuse weist daher zumindest eine gewisse Verformbarkeit auf. Durch diese Verformbarkeit des Zellgehäuses folgt das Zellgehäuse Volumenänderungen im Inneren der Zelle. Insgesamt handelt es sich bei den Zellen vorliegend um sogenannte prismatische Zellen.

Unter "Zellmodul" wird vorliegend insbesondere ein Zellmodul verstanden, bei dem beispielsweise 4 bis 20, und insbesondere 4 bis 14 Zellen miteinander in Serie verschaltet und angeordnet sind.

Das Bestimmen des Abstandsmaßes und insbesondere einer Abstandsänderung zwischen zwei in Querrichtung benachbarten Zellen erlaubt eine individuelle Überwachung einer jeweiligen Zelle und hat den besonderen Vorteil einer hohen Sensitivität im Hinblick auf die Erkennung einer Fehlfunktion und Schädigung einer individuellen Zelle. Im Unterschied zu Überwachungssystemen, bei denen beispielsweise lediglich die Ausdehnung des gesamten Zellmoduls ermittelt wird, ist die Empfindlichkeit deutlich höher. Hierdurch ist eine zuverlässige und sichere prädiktive Erkennung eines potentiell schwerwiegenden Folgeschadens gewährleistet.

Sofern vorliegend von "Änderung", beispielsweise eines Messwerts oder einer hiervon abgeleiteten Größe, wie zum Beispiel der Abstand, gesprochen wird, so bezieht sich der Begriff "Änderung" immer auf einen Basis- oder Referenzwert in einem Ausgangszustand der Batterie. Ein solcher Ausgangszustand ist insbesondere ein lastfreier Zustand bei einer Referenztemperatur insbesondere von beispielsweise 20°. Dieser Referenz- oder Basiswert wird insbesondere durch eine Kalibriermessung erfasst und hinterlegt. Eine derartige Kalibriermessung erfolgt beispielsweise bei jeder einzelnen Batterie oder alternativ lediglich anhand einer Referenzbatterie, zu der die jeweilige Batterie baugleich ist.

Die Zellgehäuse benachbarter Zellen sind jeweils elektrisch über Anschlussleitungen kontaktiert und die Anschlussleitungen sind mit dem zumindest einen Messgerät verbunden. Es erfolgt also eine direkte Kapazitätsmessung zwischen dem Zellgehäuse benachbarter Zellen.

Für die Verwendung der Zellgehäuse als Teil eines Kondensators sind die Zellgehäuse allgemein aus Metall oder zumindest mit einer metallischen Oberfläche versehen. Die Anschlussleitungen benachbarter Zellen sind gemäß einer ersten Variante jeweils mit einem Messgerät verbunden, sodass jeweils ein Messgerät einem Zell-Paar zugeordnet ist. Alternativ besteht auch die Möglichkeit, ein gemeinsames, beispielsweise mehrkanaliges Messgerät zu verwenden, an dem die Anschlussleitungen von mehreren Zell-Paaren angeschlossen sind und jedes Paar einen Messkanal bildet.

Weiterhin ist die Messanordnung derart ausgebildet, dass zwischen jedem benachbarten Paar an Zellgehäusen die Kapazität erfasst wird. Hierdurch ist also eine individuelle Überwachung einer jeden Zelle eines Zellmoduls ermöglicht.

Bevorzugt ist weiterhin zwischen benachbarten Zellen ein Zwischenkörper mit einer vorgegebenen Dielektrizitätszahl angeordnet. Bei diesem Zwischenkörper handelt es sich beispielsweise um eine Art Hitzeschild. Der Zwischenkörper dient also zur thermischen Isolierung zwischen in Querrichtung benachbarten Zellen. Als Material hierfür werden beispielsweise auf Silikon basierende Elastomere oder keramische Werkstoffe eingesetzt. Bei diesem Zwischenkörper handelt es sich um einen insbesondere plattenförmigen Körper, welcher elastisch ausgebildet ist, um den Abstandsänderungen zu folgen. Er füllt insbesondere den Abstand, also die Distanz zwischen den Zellgehäusen in Querrichtung vollständig aus. Bevorzugt weist der Zwischenkörper eine (zusätzliche) Strukturierung auf, insbesondere eine wabenartige Struktur, oder ist durch eine solche wabenartige Struktur gebildet. Eine solche Strukturierung auf dem Zwischenkörper oder auch des gesamten Zwischenkörpers verringert die Kontaktfläche des auf dem Zellgehäuse anliegenden Materials. Durch die Strukturierung werden allgemein zumindest an den Kontaktflächen zu den Zellgehäusen Hohlräume oder "Lufttaschen" geschaffen, die der thermischen Isolierung der Zellen dienen.

Die einzelnen Zellen sind standardmäßig in herkömmlicher Weise elektrisch verschaltet, dass heißt eine jeweilige Zelle weist Anschlusskontakte auf, über die die von der jeweiligen Zelle bereitgestellte Spannung über ein Kontaktierungssystem abgegriffen wird. Zusätzlich zu diesem Kontaktierungssystem ist in zweckdienlicher Weiterbildung eine zusätzliche Leiterstruktur als ergänzende Kontaktierungsstruktur für die elektrische Kontaktierung der einzelnen Zellgehäuse vorgesehen. Zweckdienlicherweise ist über diese Leiterstruktur jedes Zellgehäuse eines Zellmoduls elektrisch kontaktiert. Allgemein sind - wie zuvor erläutert - mehrere Zellen zu einem solchen Modul zusammengefasst und in einem gemeinsamen Modulgehäuse angeordnet. Bei dem Modulgehäuse handelt es sich beispielsweise um ein eigensteifes, beispielsweise metallisches Gehäuse.

Zur elektrischen Verbindung der einzelnen Zellgehäuse speziell mit der Leiterstruktur sind jeweils Kontaktelemente vorgesehen. Diese sind beispielsweise über individuelle Kontaktschweißungen mit dem jeweiligen Zellgehäuse ausgebildet, so dass die Leiterstruktur elektrisch leitend mit den Zellgehäuse verbunden ist.

In bevorzugter Alternative hierzu erfolgt die elektrische Kontaktierung eines jeweiligen Zellgehäuses über ein als Federkontakt ausgebildetes Kontaktelement.

Die Kontaktierung erfolgt dabei vorzugsweise lediglich von oben, d.h. die Kontaktelemente kontaktieren die einzelnen Zellgehäuse an einer oberen. Gehäusewand. Kontaktelemente oder Anschlussleitungen, die zu den Seitenwänden oder in die Bereiche zwischen den Seitenwänden führen sind daher vorzugsweise nicht vorgesehen.

Durch die Leiterstruktur werden die Anschlussleitungen zumindest teilweise ausgebildet, mit denen die einzelnen Zellgehäuse elektrisch kontaktiert und mit dem Messgerät verbunden sind.

Bei der Leiterstruktur handelt es sich beispielsweise um ein auf einer Trägerplatte aufgebrachtes Leiterbahnmuster nach Art einer beispielsweise auch flexiblen Leiterplatte.

Wie bereits zuvor erwähnt, handelt es sich bei dem Zellgehäuse vorzugsweise um ein Metallgehäuse und bei der Zelle um eine sogenannte prismatische Zelle.

Bevorzugt ist die Messanordnung dazu ausgebildet, die ermittelten Kapazitätsänderungen der Zell-Paare miteinander zu vergleichen. Weiterhin ist die Messanordnung bevorzugt dazu ausgebildet, diese Kapazitätsänderungen im Hinblick auf eine ungleichmäßige Änderung (insbesondere gegenüber dem erwähnten Basiswert) zu überwachen, wobei eine ungleichmäßige Änderung der Messwerte verschiedener Zell-Paare als ein Übersteigen des kritischen Wertes gewertet wird und eine entsprechende Gegenmaßnahme initiiert wird.

Die ermittelten Werte für die Kapazitäten bzw. Abstandsmaße von verschiedenen Zell-Paaren werden daher relativ zueinander verglichen. Dies beruht auf der Überlegung, dass beispielsweise eine starke Änderung bei einem Zell-Paar darauf hindeutet, dass eine Zelle dieses Zell-Paars fehlerhaft ist. Demgegenüber würden die ermittelten Werte von nicht fehlerhaften Zell-Paaren, eine deutlich geringere Änderung erfahren, sodass also aus diesem relativen Vergleich ein Rückschluss auf eine defekte Zelle gezogen werden kann. Sofern vorliegend von einer "ungleichmäßigen Änderung" gesprochen wird, so wird hierunter verstanden, dass die Änderungen der ermittelten Werte voneinander um mehr als ein zulässiger Toleranzbereich abweichen, wobei der Toleranzbereich beispielsweise 10%, 20% oder 30% bezogen auf die Änderung beträgt.

Durch die individuelle Auswertung der Werte von Zell-Paaren ist weiterhin auch eine Lokalisierung der schadhaften Zelle möglich und wird vorzugsweise durch die Auswerteeinheit auch vorgenommen.

In zweckdienlicher Weiterbildung ist ergänzend eine Erfassungseinheit, insbesondere ein Temperatursensor, zur Erfassung einer aktuellen Betriebstemperatur der Batterie angeordnet. Die Auswerteeinheit ist weiterhin derart eingerichtet, dass der kritische Wert, ab dem also auf eine potentielle Schädigung geschlossen wird, in Abhängigkeit der aktuellen Betriebstemperatur eingestellt wird. Der zumindest eine Temperatursensor ist dabei an einer geeigneten Messstelle unmittelbar an oder in der Batterie platziert.

Ein Ausführungsbeispiel der Erfindung wird nachfolgend anhand der Figuren näher erläutert. Diese zeigen in vereinfachten Darstellungen:
- Fig. 1: eine vereinfachte Darstellung eines Zellmoduls einer Batterie,
- Fig. 2: eine Darstellung zur Illustration der Verschaltung der einzelnen Zellen sowie
- Fig. 3: eine Batterie mit mehreren Zellmodulen.

In den Figuren sind gleichwirkende Teile mit den gleichen Bezugszeichen versehen.

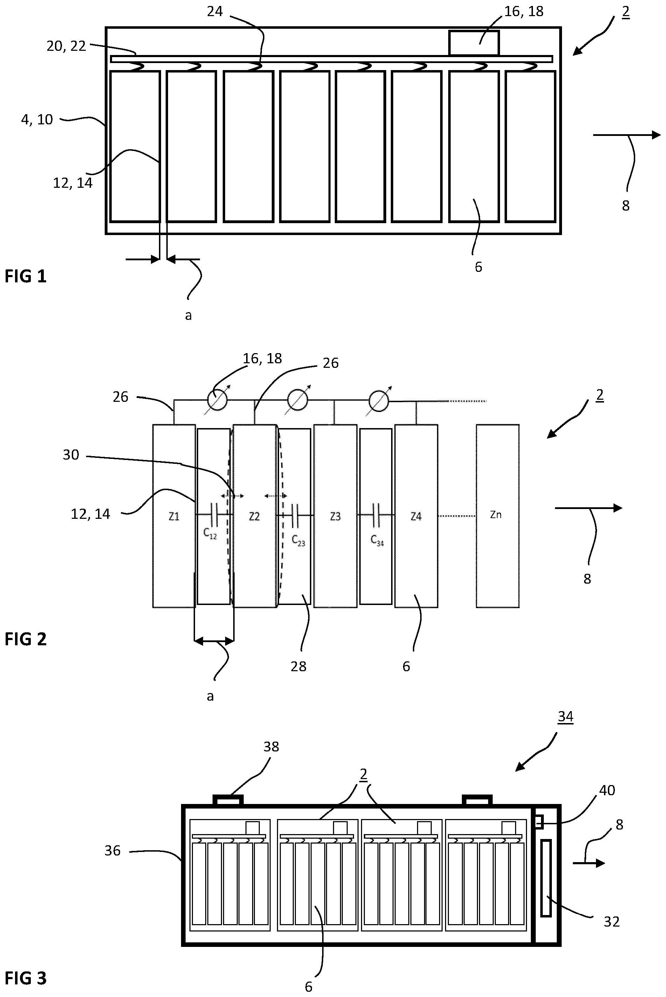

Das in Fig. 1 dargestellte Zellmodul 2 weist ein Modulgehäuse 4 auf, innerhalb dessen mehrere Zellen 6 angeordnet sind. Das Zellmodul 2 erstreckt sich dabei in eine Querrichtung 8 und die vorzugsweise quaderförmig ausgebildeten einzelnen Zellen 6 sind in dieser Querrichtung 8 nebeneinander angeordnet. Das Modulgehäuse 4 weist in Querrichtung 8 betrachtet Seitenwände 10 auf, welche die Zellen 6 in Querrichtung zwischen sich einspannen.

Im Ausführungsbeispiel sind beispielhaft insgesamt acht Zellen 6 dargestellt. Eine jede Zelle 6 weist ein Zellgehäuse 12 mit jeweils Randseiten 14 auf.

Benachbarte Zellen 6 weisen zueinander in einem unbelasteten Ausgangszustand in Querrichtung 8 betrachtet typischerweise einen Abstand a von vorzugsweise 100µm bis 500µm, insbesondere von 300µm auf.

Innerhalb des jeweiligen Modulgehäuses 4 ist weiterhin eine Messanordnung 16 ausgebildet. Diese weist zumindest ein Messgerät 18 auf, welches zur Messung einer Kapazität zwischen benachbarten Zellgehäusen 12 vorgesehen ist. In Fig. 1 ist beispielhaft lediglich ein Messgerät 18 dargestellt. In Fig. 2 sind demgegenüber mehrere Messgeräte 18 dargestellt, die jeweils zur Messung der Kapazität zwischen benachbarten Zellen 6 vorgesehen sind.

Bei einer Änderung des Abstands a wird eine Änderung der Kapazität zwischen den benachbarten Zellen 6 hervorgerufen. Das jeweilige Messgerät 18 ist beispielsweise ein RC-Oszillator. Eine Änderung der Kapazität führt zu einer Veränderung der Frequenz eines periodischen, beispielsweise sinusförmigen Wechselspannungssignals des Oszillators.

Weiterhin umfasst die Messanordnung 16 im Ausführungsbeispiel der Fig. 1 eine Leiterstruktur 20, welche beispielsweise auf einer Leiterplatte 22 ausgebildet ist. Ein jeweiliges Zellgehäuse 20 wird vorzugsweise - wie in Fig. 1 dargestellt - mit einem elektrischen Federkontakt 24 elektrisch kontaktiert. Die Leiterstruktur 20 zusammen mit dem Federkontakt 24 definieren insofern Anschlussleitungen 26, wie sie in Fig. 2 dargestellt sind. Über diese wird das jeweilige Messgerät 18 mit dem Zellgehäuse 12 elektrisch verbunden.

In der Fig. 2 ist eine Anzahl von insgesamt n Zellen 6 dargestellt, welche in der Fig. 2 mit Z1, Z2, Z3, Z4 ... Zn bezeichnet sind. Zwischen den - in Querrichtung 8 betrachtet - einander gegenüberliegenden Randseiten 14 von benachbarten Zellen 6 ist eine Kapazität ausgebildet. Diese ist in der Fig. 2 jeweils durch das Symbol eines Kondensators dargestellt. Die Randseiten 14 der Zellgehäuse 12 bilden insofern Kondensatorplatten eines solchen Kondensators. Zwischen den einzelnen Zellen 6 sind daher Kapazitäten C₁₂, C₂₃, C₃₄ .... ausgebildet.

Weiterhin ist in Fig. 2 ein Zwischenkörper 28 dargestellt, welcher elastisch ausgebildet ist und eine definierte, vorgegebene Dielektrizitätszahl aufweist. Hierdurch wird also die Eigenschaft und speziell die Kapazität des durch die gegenüberliegenden Randseiten 10 gebildeten Kondensators maßgebend beeinflusst. Hierdurch wird die Sensitivität der Messung insgesamt verbessert und erhöht.

Im Ausführungsbeispiel der Fig. 2 ist beispielhaft die mit Z2 bezeichnete Zelle 6 schadhaft und zeigt beispielsweise aufgrund einer erhöhten Zelltemperatur eine Ausdehnung auf, wie dies durch die gestrichelten Linien der Randseiten 14 dargestellt ist. In Richtung der Pfeile 30 wird daher der Abstand a zu den benachbarten Zellen 6 verändert, was zu einer Veränderung der Kapazität führt. Diese veränderte Kapazität wird durch die Messgeräte 18 erfasst und durch eine insbesondere übergeordnete Auswerteeinheit 32 ausgewertet und einem Abstandsmaß zugeordnet. Die Auswerteeinheit 32 ist ebenfalls Teil der Messanordnung 16.

Diese übergeordnete Auswerteeinheit 32 ist beispielhaft in der Fig. 3 dargestellt. Diese zeigt eine Batterie 34 mit einem Batteriegehäuse 36 und zwei Anschlusspolen 38, über die die elektrische Spannung der Batterie 34 abgegriffen werden kann wird. Innerhalb der Batterie 34 und des Batteriegehäuses 36 sind mehrere Zellmodule 2, wie sie in Fig. 1 dargestellt sind, angeordnet. Die Batterie 34 weist üblicherweise ein sogenanntes Batterie-Management-System auf. Die dargestellte Auswerteeinheit 32 ist beispielsweise Teil eines solchen Batterie-Management-Systems. Die Auswerteeinheit 32 ist mit den Messgeräten 18 jeweils verbunden.

Überschreitet eine Kapazitätsänderung und damit eine Abstandsänderung zwischen zwei benachbarten Zellen einen kritischen Wert, welcher auf eine potentielle Schädigung einer Zelle hindeutet, so gibt die Auswerteeinheit 32 ein entsprechendes Warnsignal ab, um beispielsweise eine Gegenmaßnahme einzuleiten. Diese Gegenmaßnahme besteht beispielsweise im Abschalten der Batterie oder zumindest in einer Reduzierung der Belastung der Batterie, beispielsweise einer Reduzierung eines Ladestroms oder eines aktuell abgegebenen Stroms.

Die Auswerteeinheit 32 wertet vorzugsweise die Veränderung der einzelnen Kapazitäten mehrerer und insbesondere aller Zell-Paare eines jeweiligen Zellmoduls 2 aus. Die Auswerteeinheit 32 erkennt dabei auf eine Überschreitung des kritischen Werts und löst die Gegenmaßnahme aus, sofern die relative Änderung (Abstandsänderung, Kapazitätsänderung) der einzelnen Abstände a bzw. Kapazitäten zwischen Zell- Paaren über einen Toleranzbereich hinweg voneinander abweichen. Der Toleranzbereich liegt beispielsweise bei +/- 10%, bei +/- 20% oder +/-30%. Hierdurch wird der Tatsache Rechnung getragen, dass im Falle einer einzelnen fehlerhaften Zelle 6 zunächst lediglich diese Zelle 6 sich überproportional (im Vergleich zu den nicht fehlerhaften Zellen 6) ausdehnt und daher besonders die dieser fehlerhaften Zelle 6 zugeordneten Kapazitäten eine übermäßige Änderung erfahren. Unterschiedliche Änderungen der Kapazitäten sind daher ein Indiz für eine fehlerhafte Zelle. Speziell wird durch diese Maßnahme auch die fehlerhafte Zelle 6 lokalisiert.

Bevorzugt ist die Auswerteeinheit 32 ergänzend auch zur Berücksichtigung der aktuell herrschenden Temperatur der Batterie 34 ausgebildet. Hierzu ist beispielsweise zumindest ein Temperatursensor 40 vorgesehen, welcher in der Fig. 3 beispielhaft als Bestandteil des Batterie Management Systems gezeigt ist. Alternativ kann auch jedem Zellmodul 2 ein Temperatursensor 40 zugeordnet sein. Durch die zusätzliche Temperaturmessung werden beispielsweise betriebsübliche Schwankungen des Abstandsmaßes a erkannt. Erst wenn die Abstände a über betriebsübliche Schwankungen hinausgehen oder ein ungewöhnliches Verhalten zeigen, wird dies als Überschreitung eines kritischen Werts angesehen und die Gegenmaßnahme wird eingeleitet.

### Bezugszeichenliste

- 2: Zellmodul
- 4: Modulgehäuse
- 6: Zellen
- 8: Querrichtung
- 10: Seitenwände
- 12: Zellgehäuse
- 14: Randseiten
- 16: Messanordnung
- 18: Messgerät
- 20: Leiterstruktur
- 22: Leiterplatte
- 24: Federkontakt
- 26: Anschlussleitung
- 28: Zwischenkörper
- 30: Pfeile
- 32: Auswerteeinheit
- 34: Batterie
- 36: Batteriegehäuse
- 38: Anschlusspol
- 40: Temperatursensor

- a: Abstand

## Patentansprüche

1. Vorrichtung zur Überwachung einer Anordnung von in einer Querrichtung (8) nebeneinander angeordneten Zellen (6), die jeweils ein Zellgehäuse (12) aufweisen, wobei eine Messanordnung (16) zur Erfassung eines Abstandmaßes zwischen zwei benachbarten Zellgehäusen (12) vorgesehen ist und hierzu die Messanordnung (16) zumindest ein Messgerät (18) zur Bestimmung der Kapazität eines Kondensators als Kriterium für das Abstandsmaß aufweist, wobei der Kondensator durch benachbarte Zellgehäuse (12) gebildet ist, wobei die Zellgehäuse (12) benachbarter Zellen (6) jeweils elektrisch über Anschlussleitungen (26) kontaktiert sind und die Anschlussleitungen (26) mit dem zumindest einen Messgerät (18) verbunden sind, und die Messanordnung (16) derart ausgebildet ist, dass im Betrieb eine direkte Kapazitätsmessung zwischen den Zellgehäusen benachbarter Zellen erfolgt.

2. Vorrichtung nach Anspruch 1, bei der es sich bei den Zellen (6) um die Zellen (6) einer Batterie (34), insbesondere einer Lithium-Ionen-Batterie handelt.

3. Vorrichtung nach einem der vorhergehenden Ansprüche, bei der die Anschlussleitungen (26) benachbarter Zellen jeweils mit einem Messgerät verbunden sind, sodass jeweils ein Messgerät einem Zell-Paar zugordnet ist oder bei der ein gemeinsames, mehrkanaliges Messgerät verwendet ist, an dem die Anschlussleitungen von mehreren Zell-Paaren angeschlossen sind und jedes Paar einen Messkanal bildet.

4. Vorrichtung nach einem der vorhergehenden Ansprüche, bei der zwischen den benachbarten Zellen (6) ein Zwischenkörper (28) mit vorgegebener Dielektrizitätszahl angeordnet ist.

5. Vorrichtung nach dem vorhergehenden Anspruch, bei der der Zwischenkörper (28) Hohlräume und insbesondere eine wabenartige Struktur aufweist.

6. Vorrichtung nach einem der vorhergehenden Ansprüche, bei der mehrere Zellen (6) zu einem Zellmodul (2) zusammengefasst und in einem gemeinsamen Modulgehäuse (4) angeordnet sind.

7. Vorrichtung nach einem der vorhergehenden Ansprüche, bei der eine Leiterstruktur (20) als Kontaktierungssystem für die Zellgehäuse (12) vorgesehen ist.

8. Vorrichtung nach Anspruch 6 und nach Anspruch 7, bei der über die Leiterstruktur (20) alle Zellgehäuse (12) des Zellmoduls (2) elektrisch kontaktiert sind.

9. Vorrichtung nach einem der vorhergehenden Ansprüche, bei der eine elektrische Kontaktierung des jeweiligen Zellgehäuses (12) über einen Federkontakt (24) erfolgt.

10. Vorrichtung nach einem der vorhergehenden Ansprüche, bei der als Material für das Zellgehäuse (12) ein elektrisch leitfähiger Werkstoff verwendet ist.

11. Vorrichtung nach einem der vorhergehenden Ansprüche, bei der benachbarte Zellen (6) jeweils ein Zell-Paar bilden und die Messanordnung (16) derart ausgebildet ist, dass die ermittelten Werte für die Abstandsmaße (a) von verschiedenen Zell-Paaren miteinander verglichen werden und hieraus auf eine defekte Zelle (6) rückgeschlossen wird, insbesondere wenn die ermittelten Werte der Abstandsmaße (a) der Zell-Paare voneinander über einen zulässigen Toleranzbereich abweichen.

12. Verfahren zur Überwachung einer Anordnung von in einer Querrichtung (8) nebeneinander angeordneten Zellen (6), die jeweils ein Zellgehäuse (12) aufweisen, insbesondere zur Überwachung einer Batterie (34), wobei ein Abstandmaß zwischen zwei benachbarten Zellen (6) erfasst wird, indem eine Kapazität eines Kondensators als Kriterium für das Abstandsmaß ermittelt wird und wobei der Kondensator durch benachbarte Zellgehäuse (12) gebildet ist, wobei die Zellgehäuse (12) benachbarter Zellen (6) jeweils elektrisch über Anschlussleitungen (26) kontaktiert sind und die Anschlussleitungen (26) mit zumindest einen Messgerät (18) verbunden sind, und eine direkte Kapazitätsmessung zwischen den Zellgehäusen benachbarter Zellen erfolgt.

13. Verfahren nach Anspruch 12, bei dem bei Überschreiten eines kritischen Wertes für das Abstandsmaß, welcher auf eine Schädigung der Zelle hindeutet, eine Gegenmaßnahme eingeleitet wird.

## Claims

1. Device for monitoring an arrangement of cells (6), arranged next to each other in a transverse direction (8), each of which having a cell housing (12), wherein a measuring arrangement (16) is provided for determining a spacing measurement between two adjacent cell housings (12), and for this purpose the measuring arrangement (16) has at least one measuring apparatus (18) for determining the capacitance of a capacitor as a criterion for the spacing measurement, wherein the capacitor is formed from adjacent cell housings (12), wherein the cell housings (12) of adjacent cells (6) are each electrically contacted via connecting lines (26), and the connecting lines (26) are connected to the at least one measuring apparatus (18), and wherein the measuring arrangement (16) is configured such that, during operation, a direct capacitance measurement between the cell housings of adjacent cells is carried out.

2. The device according to claim 1, wherein the cells (6) are cells (6) of a battery (34), in particular a lithium-ion battery.

3. The device according to any one of the preceding claims, wherein the connecting lines (26) of adjacent cells are each connected to a measuring apparatus, such that a measuring apparatus is each assigned to a pair of cells or wherein a common multi-channel measuring apparatus is used, to which the connecting lines of several pairs of cells are connected and each pair constitutes a measuring channel.

4. The device according to any one of the preceding claims, wherein an intermediate body (28) with a pre-established dielectric constant is arranged between the adjacent cells (6).

5. The device according to the preceding claim, wherein the intermediate body (28) has empty spaces and in particular a honeycomb structure.

6. The device according to any one of the preceding claims, wherein multiple cells (6) are combined into a cell module (2) and are arranged in a common module housing (4).

7. The device according to any one of the preceding claims, wherein a conductive structure (20) is provided as an interconnection system for the cell housings (12).

8. The device according to claim 6 and according to claim 7, wherein all the cell housings (12) of the cell module (2) are electrically contacted via the conductive structure (20).

9. The device according to any one of the preceding claims, wherein an electrical contacting of the respective cell housing (12) is effected by means of a spring contact (24).

10. The device according to any one of the preceding claims, wherein an electrically conductive material is used as material for the cell housing (12).

11. The device according to any one of the preceding claims, wherein adjacent cells (6) each constitute a cell pair and the measuring arrangement (16) is configured such that the determined values of the spacing measurements (a) of different cell pairs are compared with each other and a defective cell (6) is deduced from this comparison, in particular when the determined values of the spacing measurements (a) of the cell pairs differ from each other beyond an admissible tolerance range.

12. Method for monitoring an arrangement of cells (6), arranged next to each other in a transverse direction (8), each of which having a cell housing (12), in particular for monitoring a battery (34), wherein a spacing measurement between two adjacent cells (6) is determined by determining a capacitance of a capacitor as a criterion for the spacing measurement, and wherein the capacitor is formed by adjacent cell housings (12), wherein the cell housings (12) of adjacent cells (6) are each electrically contacted via connecting lines (26), and the connecting lines (26) are connected to at least one measuring apparatus (18), and a direct capacitance measurement between the cell housings of adjacent cells is carried out.

13. The method according to claim 12, wherein, when a critical value of the spacing measurement is exceeded, which indicates a damage to the cell, a countermeasure is triggered.

## Revendications

1. Dispositif destiné à la surveillance d'un ensemble de cellules (6) disposées les unes à côté des autres dans une direction transversale (8), qui comportent chacune un boîtier (12) de cellule, un système de mesure (16) étant prévu pour la détermination d'une mesure d'espacement entre deux boîtiers (12) de cellules adjacents et le système de mesure (16) comportant à cet effet au moins un appareil de mesure (18) destiné à la détermination de la capacité d'un condensateur en tant que critère de la mesure d'espacement, le condensateur étant constitué par des boîtiers (12) de cellules adjacents, les boîtiers (12) de cellules de cellules (6) adjacentes étant chacun mis électriquement en contact par l'intermédiaire de lignes de raccordement (26) et les lignes de raccordement (26) étant reliées audit au moins un appareil de mesure (18), et le système de mesure (16) étant configuré de façon telle qu'en fonctionnement s'effectue une mesure directe de capacité entre les boîtiers de cellules de cellules adjacentes.

2. Dispositif selon la revendication 1, dans lequel pour ce qui est des cellules (6) il s'agit des cellules (6) d'une batterie (34), en particulier d'une batterie lithium-ion.

3. Dispositif selon l'une quelconque des revendications précédentes, dans lequel les lignes de raccordement (26) de cellules adjacentes sont reliées chacune à un appareil de mesure, de sorte qu'un appareil de mesure est chaque fois affecté à une paire de cellules ou dans lequel est utilisé un appareil de mesure multicanal commun, auquel sont raccordées les lignes de raccordement de plusieurs paires de cellules et chaque paire constitue un canal de mesure.

4. Dispositif selon l'une quelconque des revendications précédentes, dans lequel entre les cellules adjacentes (6) est disposé un corps intermédiaire (28) à constante diélectrique préétablie.

5. Dispositif selon la revendication précédente, dans lequel le corps intermédiaire (28) comporte des espaces vides et en particulier une structure en nid d'abeille.

6. Dispositif selon l'une quelconque des revendications précédentes, dans lequel plusieurs cellules (6) sont réunies en un module (2) de cellules et sont disposées dans un boîtier (4) de module commun.

7. Dispositif selon l'une quelconque des revendications précédentes, dans lequel une structure conductrice (20) est prévue en tant que système d'interconnexion pour les boitiers (12) de cellules.

8. Dispositif selon la revendication 6 et selon la revendication 7, dans lequel tous les boîtiers (12) de cellules du module (2) de cellules sont mis électriquement en contact par l'intermédiaire de la structure conductrice (20).

9. Dispositif selon l'une quelconque des revendications précédentes, dans lequel une mise en contact électrique du boîtier (12) de cellule respectif s'effectue au moyen d'un contact à ressort (24).

10. Dispositif selon l'une quelconque des revendications précédentes, dans lequel en tant que matériau pour le boîtier (12) de cellule est utilisé un matériau électriquement conducteur.

11. Dispositif selon l'une quelconque des revendications précédentes, dans lequel des cellules adjacentes (6) constituent chaque fois une paire de cellules et le système de mesure (16) est configuré de façon telle que les valeurs déterminées des mesures d'espacement (a) de différentes paires de cellules sont comparées entre elles et une cellule défectueuse (6) est déduite de cette comparaison, en particulier lorsque les valeurs déterminées des mesures d'espacement (a) des paires de cellules diffèrent entre elles au-delà d'une plage de tolérance admissible.

12. Procédé pour la surveillance d'un ensemble de cellules (6) disposées les unes à côté des autres dans une direction transversale (8), qui comportent chacune un boîtier (12) de cellule, en particulier pour la surveillance d'une batterie (34), dans lequel une mesure d'espacement entre deux cellules (6) adjacentes est déterminée par détermination d'une capacité d'un condensateur en tant que critère de la mesure d'espacement, et le condensateur étant constitué par des boîtiers (12) de cellules adjacents, les boîtiers (12) de cellules de cellules (6) adjacentes étant chacun mis électriquement en contact par l'intermédiaire de lignes de raccordement (26) et les lignes de raccordement (26) étant reliées à au moins un appareil de mesure (18), et une mesure directe de capacité entre les boîtiers de cellules de cellules adjacentes s'effectuant.

13. Procédé selon la revendication 12, dans lequel en cas de dépassement d'une valeur critique de la mesure d'espacement, qui indique un endommagement de la cellule, une contre-mesure est déclenchée.
